# EUROPEAN PATENT APPLICATION

(11) **EP 4 734 307 A1**
(43) Date of publication of application: **29.04.2026**
(21) Application number: 24830482.6
(22) Date of filing: 12.06.2024
(51) Int. Cl.: H02H 1/04

(54) **OVERCURRENT PROTECTION CIRCUIT AND OVERCURRENT PROTECTION METHOD**

(30) Priority: 30.06.2023 CN 202310799648
(71) Applicant: ZTE CORPORATION, Shenzhen, Guangdong 518057 (CN)
(72) Inventor: ZHANG, Benjun, Shenzhen, Guangdong 518057 (CN); LIU, Ting, Shenzhen, Guangdong 518057 (CN); QIN, Chuan, Shenzhen, Guangdong 518057 (CN)
(74) Representative: Ziebig Hengelhaupt Intellectual Property Attorneys Patentanwaltskanzlei PartGmbB
(86) International application number: PCT/CN2024/098560
(87) International publication number: WO 2025/001836

(57) **Abstract**

The present application discloses an overcurrent protection circuit and an overcurrent protection method. The overcurrent protection circuit comprises an on-off module, a sampling module, and a control module; a first end of the on-off module is connected to a power supply, a second end of the on-off module is connected to a first end of the sampling module, and a control end of the on-off module is connected to an output end of the control module; a second end of the sampling module is connected to an electric device, a third end of the sampling module is connected to a first input end of the control module, and the sampling module is used for converting an output current of the power supply into a voltage; a second input end of the control module is connected to the power supply; and the control module is used for receiving the voltage value of the sampling module, and controlling the on-off module to be turned off when the voltage value is greater than or equal to a preset overcurrent threshold and the duration is greater than or equal to a turn-off threshold.

## Description

### CROSS-REFERENCE TO RELEVANT APPLICATIONS

The present application claims priority to Chinese Application No. 202310799648.9, filed with the Chinese Patent Office on June 30, 2023, with the title "OVERCURRENT PROTECTION CIRCUIT AND OVERCURRENT PROTECTION METHOD", the disclosure of which is hereby incorporated by reference in its entirety.

### TECHNICAL FIELD

The present application belongs to the field of overcurrent protection, and in particular, to an overcurrent protection circuit and an overcurrent protection method.

### BACKGROUND

At present, in the field of electronic circuit technology, the stability of circuit design is increasingly receiving high attention. Overcurrent is a common abnormal phenomenon in power supply, which can cause circuit abnormalities and, in severe cases, safety accidents such as device and equipment burnout. Therefore, the design of overcurrent protection is very necessary.

In related technologies, the overcurrent protection method is to use electronic switches to cut off high current circuits. Due to the characteristics of fast response, high sensitivity, and the ability to disconnect circuits in the order of microseconds, using electronic switches for overcurrent protection often misidentifies normal pulses and surges on the circuit as overcurrent, disconnecting the circuit and causing unnecessary power outages of electric device.

### SUMMARY

In the first aspect, the embodiment of the present application discloses an overcurrent protection circuit, comprising: an on-off module, a sampling module, and a control module, wherein: a first end of the on-off module is connected to a power supply, a second end of the on-off module is connected to a first end of the sampling module, and a control end of the on-off module is connected to an output end of the control module; a second end of the sampling module is connected to an electric device, and a third end of the sampling module is connected to a first input end of the control module, the sampling module is used to convert the output current of the power supply into voltage; a second input end of the control module is connected to the power supply; the control module is used to receive a voltage value of the sampling module, and control the on-off module to be turned off when the voltage value is greater than or equal to a preset overcurrent threshold and the duration is greater than or equal to a turn-off threshold.

In the second aspect, the embodiment of the present application discloses an overcurrent protection method, applied to the overcurrent protection circuit described in the first aspect, comprising: receiving a voltage value of a sampling module; controlling an on-off module to be turned off when the voltage value is greater than or equal to a preset overcurrent threshold and the duration is greater than or equal to a turn-off threshold.

In the third aspect, the embodiment of the present application discloses electronic device, comprising a processor and a memory, wherein the memory stores programs or instructions executable on the processor, which, when executed by the processor, implements the steps of the method described in the second aspect.

In the fourth aspect, the embodiment of the present application discloses a readable storage medium, having programs or instructions stored thereon, which, when executed by a processor, implements the steps of the method described in the second aspect.

In the fifth aspect, the embodiment of the present application discloses a chip, compriseing a processor and a communication interface, wherein the communication interface is coupled to the processor, and the processor is used to run programs or instructions to implement the steps of the method described in the second aspect.

In the sixth aspect, the embodiment of the present application discloses a computer program product, the program product is stored on a storage medium and executed by at least one processor to implement the steps of the method described in the second aspect.

### BRIEF DESCRIPTION OF DRAWINGS

Fig. 1 is a schematic diagram of the structure of an overcurrent protection circuit disclosed in an embodiment of the present application;
Fig. 2 is a flowchart of an overcurrent protection method disclosed in an embodiment of the present application;
Fig. 3 is a schematic diagram of the structure of an electronic device disclosed in an embodiment of the present application.

### DETAILED DESCRIPTION

Below, the technical solution in the embodiments of the present application will be clearly described in conjunction with the accompanying drawings. Obviously, the described embodiments are a part of the embodiments of the present application, not all of them. Based on the embodiments described in the present application, all other embodiments obtained by those skilled in the art are within the scope of protection of this application.

The terms "first", "second", etc. in the specification and claims of the present application are used to distinguish similar objects and not to describe a specific order or sequence. It should be understood that the data used in this way can be interchanged in appropriate circumstances, so that the embodiments of the present application can be implemented in an order other than those illustrated or described herein, and the objects distinguished by "first", "second", etc. are usually of the same class, without limiting the number of objects, for example, the first object can be one or multiple. In addition, in the specification and claims, "and/or" represents at least one of the connected objects, and the character "/" generally indicates a "or" relationship between the related objects.

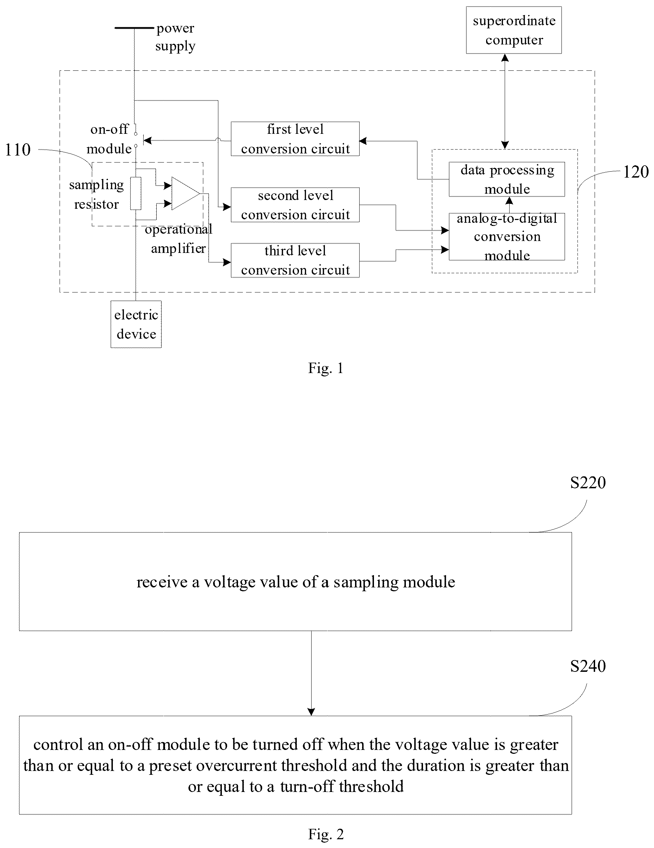

The present application discloses an overcurrent protection circuit and an overcurrent protection method, Fig. 1 is a schematic diagram of the structure of an overcurrent protection circuit disclosed in the embodiment of the present application.

As shown in Fig. 1, the overcurrent protection circuit disclosed in the embodiment of the present application includes an on-off module, a sampling module 110 and a control module 120, wherein: the first end of the on-off module is connected to the power supply, the second end of the on-off module is connected to the first end of the sampling module 110, and the control end of the on-off module is connected to the output end of the control module 120; the second end of the sampling module 110 is connected to the electric device, and the third end of the sampling module 110 is connected to the first input end of the control module 120, the sampling module 110 is used to convert the output current of the power supply into voltage; the second input end of the control module 120 is connected to the power supply; the control module 120 is used to receive the voltage value of the sampling module 110, and control the on-off module to be turned off when the voltage value is greater than or equal to the preset overcurrent threshold and the duration is greater than or equal to the turn-off threshold.

In the present application, the control module 120 is powered by a power supply, and the on-off module is used to turn on or turn off the power supply of the electrical device.

When the power supply is turned on and the on-off module is conducting, the sampling module 110 converts the output current of the power supply into voltage, and transmits the corresponding voltage value to the control module 120 through the first input end of the control module 120. After receiving the voltage value of the sampling module 110, the control module 120 compares it with the preset overcurrent threshold. When the voltage value is greater than or equal to the preset overcurrent threshold and the duration is greater than or equal to the turn-off threshold, it is considered that an overcurrent that has a substantial impact on the electric device has occurred. The control module 120 sends a control signal to the control end of the on-off module, controls the on-off module to be turned off, cuts off the power supply circuit of the electric device, and performs overcurrent protection. At this time, the control module 120 can also set the power supply-on protection register in the control module 120 to be valid (i.e. 1). If the voltage value is greater than or equal to the preset overcurrent threshold, but the duration is less than the turn-off threshold, the control module 120 considers that the overcurrent at this time may be transient overcurrent or pulse current, caused by the impact of surge or grid instability on the circuit, not a constant current, will not damage the circuit, nor will it have a substantial impact on the electric device. Therefore, keeping the on-off module conductive can avoid unnecessary power outages of the electric device. If the voltage value is less than the preset overcurrent threshold, it is considered to be in normal working condition.

The embodiment of the present application provides an overcurrent protection circuit, which comprises an on-off module, a sampling module 110, and a control module 120. The first end of the on-off module is connected to the power supply, the second end of the on-off module is connected to the first end of the sampling module 110, the control end of the on-off module is connected to the output end of the control module 120, the second end of the sampling module 110 is connected to the electric device, and the third end of the sampling module 110 is connected to the first input end of the control module 120. The sampling module 110 is used to convert the output current of the power supply into voltage, and the second input end of the control module 120 is connected to the power supply. The control module 120 is used to receive the voltage value of the sampling module 110. When the voltage value is greater than or equal to the preset overcurrent value and the duration is greater than or equal to the turn-off threshold, it is considered that an overcurrent that has a substantial impact on the electric device has occurred. At this time, the control module 120 sends a control signal to the control end of the on-off module, controls the on-off module to be turned off, cuts off the power supply circuit of the electric device, and performs overcurrent protection, which can avoid unnecessary power outages of the electric device due to incorrect determination.

In an embodiment of the present application, the control module 120 is further used to control the on-off module to conduct when the duration for which the on-off module is controlled to be turned off is greater than or equal to the preset duration. That is to say, in the event of an overcurrent that has a substantial impact on the electric device, the control module 120 controls the on-off module to be turned off and delay power on. When the duration for which the on-off module is controlled to be turned off is greater than or equal to the preset duration, the control module 120 sends a control signal to the control end of the on-off module, controls the on-off module to conduct, and automatically restores the power supply function without manual operation. By delaying the power on, it is possible to effectively prevent the adverse effects caused by re-conducting the on-off module to restore the power supply function when the overcurrent phenomenon that has a substantial impact on electric device is not eliminated in a timely manner. In addition, when controlling the conduction of the on-off module and automatically restoring the power supply function, the control module 120 can also set the power supply-on protection register in the control module 120 to be invalid (i.e. 0).

In an embodiment of the present application, the turn-off threshold can be a value determined based on the degree of impact of the duration of the preset overcurrent threshold on the electric device, and the turn-off threshold is negatively correlated with the preset overcurrent threshold. Since the turn-off threshold is a value determined based on the degree of impact of the duration of the preset overcurrent threshold on the electric device, the overcurrent protection circuit disclosed in the present application can perform overcurrent protection more accurately.

In the present application, the preset overcurrent threshold can be multiple. For example, a basic overcurrent threshold can be set, values can be assigned to N for N times the basic overcurrent threshold. Each value corresponds to a preset overcurrent threshold. For example, depending on the overcurrent situation, values of N can include 2, 3, 5, 8, or 10, and the corresponding preset overcurrent thresholds can include 2 times the basic overcurrent threshold, 3 times the basic overcurrent threshold, 5 times the basic overcurrent threshold, 8 times the basic overcurrent threshold, or 10 times the basic overcurrent threshold. Based on the degree of impact of the duration of different preset overcurrent thresholds on the electric device, the turn-off thresholds are determined corresponding to each preset overcurrent threshold for more accurate overcurrent protection.

It should be noted that the turn-off threshold corresponds one-to-one with the preset overcurrent threshold. The larger the preset overcurrent threshold, the smaller its corresponding turn-off threshold. The smaller the preset overcurrent threshold, the larger its corresponding turn-off threshold.

In an implementation, the control module 120 may store a correspondence table between preset overcurrent thresholds and turn-off thresholds, which includes multiple correspondences between preset overcurrent thresholds and turn-off thresholds. For example, the correspondence table includes a first preset overcurrent threshold and its corresponding first turn-off threshold, a second overcurrent threshold and its corresponding second turn-off threshold, a third overcurrent threshold and its corresponding third turn-off threshold, the first preset overcurrent threshold < the second preset overcurrent threshold < the third preset overcurrent threshold. Correspondingly, the first turn-off threshold >the second turn-off threshold>the third turn-off threshold. On this basis, when the control module 120 receives the voltage value from the sampling module 110, it first compares the voltage value with various preset overcurrent thresholds. When the voltage value is less than the first preset overcurrent threshold, it is considered to be in a normal working state; when the voltage value is greater than or equal to the first preset overcurrent threshold and less than the second preset overcurrent threshold, further determine its duration. When its duration is also greater than or equal to the first turn-off threshold, the control module 120 controls the on-off module to be turned off, and when its duration is less than the first turn-off threshold, the on-off module remains conductive; when the voltage value is greater than or equal to the second preset overcurrent threshold and less than the third preset overcurrent threshold, further determine its duration. When its duration is also greater than or equal to the second turn-off threshold, the control module 120 controls the on-off module to be turned off, and when its duration is less than the second turn-off threshold, the on-off module remains conductive; when the voltage value is greater than or equal to the third preset overcurrent threshold, further determine its duration. When its duration is also greater than or equal to the third turn-off threshold, the control module 120 controls the on-off module to be turned off, and when its duration is less than the third turn-off threshold, the on-off module remains conductive.

In an implementation, as shown in Fig. 1, the sampling module 110 may comprise a sampling resistor and an operational amplifier, the first end of the sampling resistor is connected to the second end of the on-off module, the second end of the sampling resistor is connected to the electric device, and the sampling resistor is used to convert the output current of the power supply into voltage; the first input end of the operational amplifier is connected to the first end of the sampling resistor, the second input end of the operational amplifier is connected to the second end of the sampling resistor, and the output end of the operational amplifier is connected to the first input end of the control module. That is to say, after converting the output current of the power supply into voltage through the sampling resistor, the operational amplifier amplifies the voltage on the sampling resistor and transmits the amplified voltage value to the control module 120 through the first input end of the control module 120 for accurate determination.

For example, the resistance of the sampling resistor can be a high-precision resistor of *0.050* Ω. If the output current of the power supply is 5A, the voltage on the sampling resistor is 0.25V. If the operational amplifier can amplify the voltage on the sampling resistor by 20 times, the voltage value received by the control module 120 is 5V.

In an implementation, as shown in Fig. 1, the control module 120 may comprise an analog-to-digital conversion module and a data processing module, the first input end of the analog-to-digital conversion module is connected to the third end of the sampling module 110, the second input end of the analog-to-digital conversion module is connected to the power supply, the output end of the analog-to-digital conversion module is connected to the input end of the data processing module, and the output end of the data processing module is connected to the control end of the on-off module; the data processing module is used to receive the target data output by the analog-to-digital conversion module, when the voltage value of the sampling module 110 represented by the target data is greater than or equal to the preset overcurrent threshold and the duration is greater than or equal to the turn-off threshold, the on-off module is controlled to be turned off.

In the present application, by supplying power to the analog-to-digital conversion module through the power supply, after receiving the voltage value from the sampling module 110, the analog-to-digital conversion module converts the voltage value from an analog signal to a digital signal, and obtains the target data corresponding to the voltage value, and sends the target data to the data processing module. When the data processing module receives the target data and the voltage value of the sampling module 110 represented by the target data is greater than or equal to the preset overcurrent threshold and the duration is greater than or equal to the turn-off threshold, it is considered that an overcurrent that has a substantial impact on the electric device has occurred. The data processing module sends a control signal to the control end of the on-off module to control the on-off module to be turned off, cut off the power supply circuit of the electric device, and perform overcurrent protection.

In an implementation, the control module 120 can be a Field Programmable Gate Array (FPGA) with a built-in Analog-to-digital Converter (ADC).

In an implementation, the on-off module can be a control switch.

In a possible implementation, as shown in Fig. 1, the above-mentioned overcurrent protection circuit may further comprise a first level conversion circuit, a second level conversion circuit, and a third level conversion circuit, the input end of the first level conversion circuit is connected to the output end of the control module 120, and the output end of the first level conversion circuit is connected to the control end of the on-off module; the input end of the second level conversion circuit is connected to the power supply, and the output end of the second level conversion circuit is connected to the second input end of the control module 120; the input end of the third level conversion circuit is connected to the third end of the sampling module 110, and the output end of the third level conversion circuit is connected to the first input end of the control module 120. The first level conversion circuit is used to convert the voltage output by the control module 120 into the driving voltage of the on-off module, the second level conversion circuit is used to convert the power supply voltage into the voltage within the input range of the control module 120, and the third level conversion circuit is used to convert the voltage of the sampling module 110 into the voltage within the input range of the control module 120.

In an embodiment of the present application, as shown in Fig. 1, the control module 120 may further connect to a superordinate computer. By configuring relevant register parameters in the control module 120 through the superordinate computer, the control module 120 can achieve the control functions described above. The registers in the control module 120 can comprise power supply-on protection register, N-fold overcurrent threshold register, turn-off threshold register, sampling period register, normal power supply threshold register, delayed power on time threshold register, power on status register, etc. Moreover, the register status in the control module 120 can be queried by the superordinate computer to know the circuit's working status and historical occurrence time, thereby timely determining the stability of the circuit and the reliability of the electric device, and preventing and avoiding the occurrence of unexpected and sudden problems. For example, if the on-off module remains in a turned off state and the power supply-on protection register is invalid, the control module 120 considers that the power supply is not turned on and there is no overcurrent that has a substantial impact on the electric device; if the on-off module is in a turned off state and the power supply-on protection register is valid, it is determined that an overcurrent has occurred that has a substantial impact on the electric device. The on-off module is thus turned off, cutting off the power supply circuit of the electric device and providing overcurrent protection.

The overcurrent protection circuit disclosed in the present application can be applied to communication, robotics, the Internet of Things, industrial control, power automation and other equipment and devices, as well as to lightning prone areas and unstable power supply areas that are prone to frequent impact on electric device causing device short circuits.

The embodiment of the present application also discloses an overcurrent protection method applied to the above-mentioned overcurrent protection circuit. Fig. 2 is a flowchart of an overcurrent protection method disclosed in the embodiment of the present application. As shown in Fig. 2, the method comprises the following steps:
S220: a voltage value of the sampling module 110 is received.
S240: the on-off module is controlled to be turned off when the voltage value is greater than or equal to the preset overcurrent threshold and the duration is greater than or equal to the turn-off threshold.

The overcurrent protection method provided in the embodiment of the present application receives the voltage value of the sampling module 110, when the voltage value is greater than or equal to the preset overcurrent threshold and the duration is greater than or equal to the turn-off threshold, an overcurrent that has a substantial impact on the electric device occurs, and the on-off module is controlled to be turned off, which can avoid unnecessary power outages of the electric device due to incorrect determination.

If the voltage value is greater than or equal to the preset overcurrent threshold, but the duration is less than the turn-off threshold, it is considered that the overcurrent at this time may be transient overcurrent or pulse current, caused by the impact of surge or grid instability on the circuit, not a constant current, will not damage the circuit, and will not have a substantial impact on the electric device. Therefore, the on-off module should be kept conductive. If the voltage value is less than the preset overcurrent threshold, it is considered to be in normal working condition.

In an embodiment of the present application, after controlling the on-off module to be turned off, it may further comprise: controlling the on-off module to be conducted when the duration of controlling the on-off module to be turned off is greater than or equal to the preset duration. That is to say, when the duration of the on-off module to be turned off is greater than or equal to the preset duration, the on-off module is controlled to conduct and automatically restore the power function without manual operation. By delaying the power on, it is possible to effectively prevent the adverse effects caused by re-conducting the on-off module to restore the power supply function when the overcurrent phenomenon that has a substantial impact on electric device is not eliminated in a timely manner.

In an implementation, the turn-off threshold is a value determined based on the degree of impact of the duration of the preset overcurrent threshold on the electric device, and the turn-off threshold is negatively correlated with the preset overcurrent threshold. Due to the fact that the turn-off threshold is a value determined based on the degree of impact of the duration of the preset overcurrent threshold on the electric device, the overcurrent protection circuit disclosed in the present application can provide more accurate overcurrent protection.

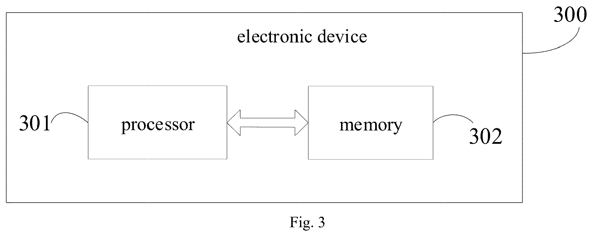

Optionally, as shown in Fig. 3, the embodiment of the present application also provides an electronic device 300, comprising a processor 301 and a memory 302, the memory 302 stores programs or instructions executable on the processor 301, which, when executed by the processor 301, implements the various steps of the overcurrent protection method embodiment described above and can achieve the same technical effect. To avoid repetition, it will not be repeated here.

It should be noted that the electronic device in the embodiment of the present application includes the mobile electronic devices and non-mobile electronic devices described above.

An embodiment of the present application also provides a readable storage medium, the programs or instructions are stored on the readable storage medium, which, when executed by a processor, implements the various processes of the overcurrent protection method embodiment described above and can achieve the same technical effect. To avoid repetition, it will not be repeated here.

Wherein the processor is the processor in the electronic device described in the above embodiments. The readable storage medium includes computer-readable storage medium such as read-only memory (ROM), random access memory (RAM), magnetic disk or optical disk, etc.

An embodiment of the present application further provides a chip, the chip comprises a processor and a communication interface, the communication interface is coupled to the processor, and the processor is used to run programs or instructions to implement the various processes of the overcurrent protection method embodiment described above and can achieve the same technical effect. To avoid repetition, it will not be repeated here.

It should be understood that the chips mentioned in the embodiment of the present application can also be referred to as system level chips, system chips, chip systems, or on-chip system chips.

An embodiment of the present application provides a computer program product, the program product is stored on a storage medium and executed by at least one processor to implement the various processes of the overcurrent protection method embodiment described above and can achieve the same technical effect. To avoid repetition, it will not be repeated here.

The focus of the previous embodiments in the present application is on the differences between each embodiment. As long as the optimization features between each embodiment are not contradictory, they can be combined to form a better embodiment. Considering the simplicity of the writing, they will not be repeated here.

The above description is only an embodiment of the present application and is not intended to limit the present application. For those skilled in the art, the present application may have various modifications and variations. Any modifications, equivalent substitutions, improvements, etc. made within the spirit and principles of the present application shall be included within the scope of the claims of the present application.

## Claims

1. An overcurrent protection circuit, comprising an on-off module, a sampling module, and a control module, wherein:
a first end of the on-off module is connected to a power supply, a second end of the on-off module is connected to a first end of the sampling module, and a control end of the on-off module is connected to an output end of the control module;
a second end of the sampling module is connected to an electric device, and a third end of the sampling module is connected to a first input end of the control module, the sampling module is used to convert the output current of the power supply into voltage;
a second input end of the control module is connected to the power supply;
the control module is used to receive a voltage value of the sampling module, and control the on-off module to be turned off when the voltage value is greater than or equal to a preset overcurrent threshold and the duration is greater than or equal to a turn-off threshold.

2. The overcurrent protection circuit according to claim 1, wherein the control module is further used to control the on-off module to conduct when the duration for which the on-off module is controlled to be turned off is greater than or equal to a preset duration.

3. The overcurrent protection circuit according to claim 1, wherein the turn-off threshold is a value determined based on the degree of impact of the duration of the preset overcurrent threshold on the electric device, and the turn-off threshold is negatively correlated with the preset overcurrent threshold.

4. The overcurrent protection circuit according to claim 1, wherein the sampling module comprises a sampling resistor and an operational amplifier, a first end of the sampling resistor is connected to the second end of the on-off module, a second end of the sampling resistor is connected to the electric device, and the sampling resistor is used to convert the output current of the power supply into voltage;
a first input end of the operational amplifier is connected to the first end of the sampling resistor, a second input end of the operational amplifier is connected to the second end of the sampling resistor, and an output end of the operational amplifier is connected to the first input end of the control module.

5. The overcurrent protection circuit according to claim 1, wherein the control module comprises an analog-to-digital conversion module and a data processing module, a first input end of the analog-to-digital conversion module is connected to the third end of the sampling module, a second input end of the analog-to-digital conversion module is connected to the power supply, an output end of the analog-to-digital conversion module is connected to an input end of the data processing module, and an output end of the data processing module is connected to the control end of the on-off module;
the data processing module is used to receive target data output by the analog-to-digital conversion module, and control the on-off module to be turned off when the voltage value of the sampling module represented by the target data is greater than or equal to the preset overcurrent threshold and the duration is greater than or equal to the turn-off threshold.

6. The overcurrent protection circuit according to claim 1, further comprising a first level conversion circuit, a second level conversion circuit, and a third level conversion circuit, wherein an input end of the first level conversion circuit is connected to the output end of the control module, and an output end of the first level conversion circuit is connected to the control end of the on-off module;
an input end of the second level conversion circuit is connected to the power supply, and an output end of the second level conversion circuit is connected to the second input end of the control module;
an input end of the third level conversion circuit is connected to the third end of the sampling module, and an output end of the third level conversion circuit is connected to the first input end of the control module.

7. The overcurrent protection circuit according to claim 1, wherein the control module is further connected to a superordinate computer.

8. An overcurrent protection method, applied to the overcurrent protection circuit according to any one of claims 1 to 7, comprising:
receiving a voltage value of a sampling module;
controlling an on-off module to be turned off when the voltage value is greater than or equal to a preset overcurrent threshold and the duration is greater than or equal to a turn-off threshold.

9. The overcurrent protection method according to claim 8, wherein after controlling the on-off module to be turned off, further comprising:
controlling the on-off module to be conducted when the duration of controlling the on-off module to be turned off is greater than or equal to a preset duration.

10. The overcurrent protection method according to claim 8, wherein the turn-off threshold is a value determined based on the degree of impact of the duration of the preset overcurrent threshold on the electric device, and the turn-off threshold is negatively correlated with the preset overcurrent threshold.

11. An electronic device, comprising a processor and a memory, wherein the memory stores programs or instructions executable on the processor, which, when executed by the processor, implement the steps of the overcurrent protection method according to any one of claims 8-10.

12. A readable storage medium, having programs or instructions stored thereon, which, when executed by a processor, implement the steps of the overcurrent protection method according to any one of claims 8-10.

13. A chip, comprising a processor and a communication interface, wherein the communication interface is coupled to the processor, and the processor is used to run programs or instructions to implement the steps of the overcurrent protection method according to any one of claims 8-10.

14. A computer program product, wherein the program product is stored on a storage medium and executed by at least one processor to implement the steps of the overcurrent protection method according to any one of claims 8-10.
